Europäisches Patentamt

European Patent Office

Office européen des brevets

(11) Veröffentlichungsnummer: **0 503 727 A1**

## EUROPÄISCHE PATENTANMELDUNG

(21) Anmeldenummer: **92200635.8**

(51) Int. Cl.⁵: **A61C 9/00**

(22) Anmeldetag: **05.03.92**

Priorität 080391 IT BZ91000004.

(30) Priorität: **08.03.91**

(43) Veröffentlichungstag der Anmeldung:
**16.09.92 Patentblatt 92/38**

(84) Benannte Vertragsstaaten:
**AT BE DE DK ES FR GB LU NL SE**

(71) Anmelder: **Baita, Walter**
**Via Otto Huber 23**
**I-39055 Laives(IT)**
Anmelder: **Girardi, Gerhard**
**Via Tre Santi 26**
**I-39100 Bolzano(IT)**

(72) Erfinder: **Baita, Walter**
**Via Otto Huber 23**
**I-39055 Laives (Bolzano)(IT)**

(74) Vertreter: **Faraggiana, Vittorio, Dr. Ing.**
**Ingg. Guzzi e Ravizza S.r.l. Via Boccaccio, 24**
**I-20123 Milano(IT)**

(54) **Befestigungseinrichtung an einer Sockelplatte für Gebissmodelle, insbesondere für zahntechnische Zwecke.**

(57) Beschrieben wird eine Befestigungseinrichtung an einer Sockelplatte für Gebißmodelle, insbesondere für zahntechnische Zwecke, die durch einen Stift (1) gebildet wird, der einen Abschnitt (2) zur Verbindung mit einer Sockelplatte für Zahnmodelle und einen Abschnitt (3) zur Verbindung mit positiven Nachbildungen von Zahnstümpfen aufweist.

Gemäß der Erfindung weist der für die Verbindung mit der Sockelplatte bestimmte Abschnitt (2) eine zur Achse des für die Verbindung mit dem Zahnstumpf bestimmten Abschnitt (3) parallelen Achse derart auf, daß eine Ausrichtung des zweiten Abschnittes (3) gegenüber dem ersteren (2) ermöglicht wird.

FIG.1

EP 0 503 727 A1

Die vorliegende Erfindung betrifft eine Befestigungseinrichtung an einer Sockelplatte für Gebißmodelle, insbesondere für zahntechnische Zwecke, gemäß dem Oberbegriff nach Anspruch 1.

Bei der Herstellung von Gebißmodellen zur Ausführung von Zahnersatzteilen, wie Füllungen, Brücken, Kronen usw., ist es bekannt, positive Nachbildungen von aus Modellwerkstoff bestehenden Zahnstümpfen durch Stifte an einer Sockelplatte lösbar zu befestigen. Jeder Stift wird in eine Aufnahme der Sockelplatte eingesteckt. Darauffolgend wird der Gebißabdruck mit dem Modellwerkstoff gefüllt. Die an der Sockelplatte befestigten Stifte werden schließlich teilweise in den sich aushärtenden Werkstoff eingefügt.

Es sind Befestigungseinrichtungen an der Sockelplatte bekannt, die aus Stiften bestehen, die im wesentlichen eine doppelkegekförmige Gestaltung aufweisen und bei denen einer der beiden Kegelabschnitte in die Sockelplatte eingesteckt und der andere Kegelabschnitt im Füllungswerkstoff des Gebißabdruckes eingebettet wird. Derartige Stifte erfordern eine hohe Genauigkeit bei der Bearbeitung der Aufnahmen bzw. der Bohrungen in der Sockelplatte, um sie einwandfrei in der Gebißabdruckfüllung zu zentrieren. Ist einmal die Befestigung an der Sockelplatte erreicht, so sind die Stifte schon endgültig positioniert, um am anderen Abschnitt mit der Füllung des Abdruckes selbst befestigt zu werden. Nachfolgend sind keine Einstellungen der Position mehr möglich, wobei so auch die Gefahr besteht, daß sich der Stift in der Füllung außerhalb der richtigen Position befindet, d.h. praktisch frei von Werkstoff außerhalb der Kontur des Füllungswerkstoffes. Eine Folge davon sind aufwendige Nacharbeiten oder es ist sogar erforderlich, den verwendeten Werkstoff, die Sockelplatte inbegriffen, zu verwerfen. Die genaue Ausrichtung zwischen der Bohrung in der Sockelplatte und praktisch der Zahnstumpfmitte erfordert einen großen Vorbereitungsaufwand. So hat man schon daran gedacht, für die Sockelplatte einen durchsichtigen Werkstoff zu verwenden, um mit einem Lichtstrahl die Stelle für die Bohrung der Sockelplatte selbst kennzuzeichnen. Die kegelförmige Gestaltung gibt überdies keinerlei eine einwandfreie Gewährleistung für die Verankerung des Stiftes im Zahnstumpf.

Die Aufgabe der vorliegenden Erfindung besteht darin, eine Befestigungseinrichtung an einer Sockelplatte für Gebißmodelle vorzuschlagen, die eine weniger prekäre Ausführung der Aufnahmen in der Sockelplatte ermöglicht, eine weniger genaue Ausrichtung zwischen Aufnahme und dem entsprechenden, auszuführenden Zahnstumpf erfordert und eine größere Sicherheit gegen das Herausfallen des anzufertigenden Zahnstumpfes gibt.

Diese Aufgabe wird durch die im kennzeichnenden Teil des Anspruchs 1 angegebenen Merkmalen gelöst.

Es ist hervorzuheben, daß dadurch, daß der für die Verankerung an der Sockelplatte bestimmte Abschnitt der Befestigungseinrichtung eine zum Halteabschnitt des Gebißmodelles außermittige Achse aufweist, eine Ausrichtung des Halteabschnittes des Gebißmodelles eventuell auch nach der erfolgten Verbindung der Befestigungseinrichtung mit der Sockelplatte möglich ist.

Dadurch, daß der Halteabschnitt des Gebißmodelles eine vorspringende Oberfläche aufweist, wie beispielsweise eine vorspringende Nase oder eine Rändelung, die im wesentlichen zur Achse des Halteabschnittes senkrecht liegt, wird die Verhinderung eines Herausfallens aus dem Gebißmodell gewährleistet.

Weitere Merkmale der erfindungsgemäßen Befestigungseinrichtung ergeben sich aus der folgenden Beschreibung einer bevorzugten, in der beigelegten Zeichnung dargestellten Ausführungsform. In der Zeichnung zeigen:

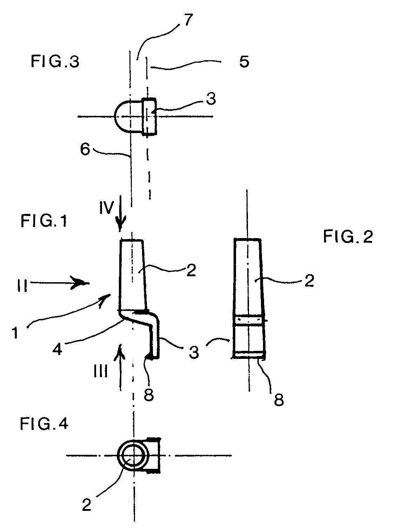

Figur 1      eine Seitenansicht der Befestigungseinrichtung,

Figur 2      eine Ansicht in Richtung gemäß des Pfeiles II aus Figur 1,

Figur 3      eine Ansicht in Richtung des Pfeiles III aus Figur 1, und

Figur 4      eine Ansicht in Richtung des Pfeiles IV aus Figur 1.

Wie in der Zeichnung dargestellt, ist die Befestigungseinrichtung aus einem im allgemeinen mit der Bezugsziffer 1 bezeichneten Stift gebildet. Der Stift 1 weist einen im wesentlichen kegelförmigen Abschnitt 2 und einen im wesentlichen flachen Abschnitt 3 auf, der mit dem Abschnitt 2 mittels einer Abkröpfung 4 derart verbunden ist, daß der flache Abschnitt 3 sich in einer Ebene 5 befindet, die zur Achse 6 des Abschnittes 2 parallel ist und eine Außermittigkeit 7 bildet.

Der Abschnitt 3 ist an seinem freien Ende mit einer zur Achse 6 senkrechten Klaue 8 versehen. Die Klaue 8 gewährleistet somit, daß ein den Abschnitt 3 umgebender Füllungswerkstoff nicht durch eine Abzugskraft vom Abschnitt selbst losgelöst wird. Es liegt nahe, daß weitere Verankerungsformen am Zahnstumf vorgesehen sein können, ohne den Schutzbereich der vorliegenden Erfindung zu verlassen, die im wesentlichen in einem Doppelstift mit einer bestimmten Außermittigkeit besteht, um sowohl eine Ausrichtung des Abschnittes 3 gegenüber dem Abschnitt 2 zu ermöglichen als auch um gleichzeitig ein Herausfallen des Zahnstumpfes zu verhindern.

Als Werkstoff für den Stift wird bevorzugt Messing verwendet.

**Patentansprüche**

1. Befestigungseinrichtung an einer Sockelplatte für Gebißmodelle, insbesondere für zahntechnische Zwecke, die durch einen Stift (1) gebildet wird, der einen Verbindungsabschnitt (2) zu einer Sockelplatte für Gebißmodelle und einen Verbindungsabschnitt (3) zu positiven Nachbildungen von Zahnstümpfen aufweist, dadurch gekennzeichnet, daß der für die Verbindung mit der Sockelplatte bestimmte Abschnitt (2) eine zur Achse des für die Verbindung mit dem Zahnstumpf bestimmten Abschnittses (3) parallele Achse derart aufweist, daß eine Ausrichtung des zweiten Abschnittes (3) gegenüber dem ersteren (2) ermöglicht wird.

2. Befestigungseinrichtung nach Anspruch 1, dadurch gekennzeichnet, daß der für die Verbindung mit dem Zahnstumpf bestimmte Stiftabschnitt (3) eine vorspringende Oberfläche aufweist.

3. Befestigungseinrichtung nach Anspruch 2, dadurch gekennzeichnet, daß die vorspringende Oberfläche eine Rändelung ist.

4. Befestigungseinrichtung nach Anspruch 1, dadurch gekennzeichnet, daß die vorspringende Oberfläche eine Nase ist, die im wesentlichen senkrecht zur Achse des für die Verbindung mit der Sockelplatte bestimmten Abschnittes (2) gerichtet ist.

FIG.3

7

5

3

6

IV

FIG.1

FIG.2

II

2

2

1

4

3

III

8

8

FIG.4

2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 139 943 (DRAGAN)<br>* Spalte 2, Zeile 47 - Zeile 61 *<br>* Spalte 3, Zeile 27 - Zeile 38; Abbildungen 1,2,6 *<br>--- | 1,2,4 | A61C9/00 |
| X | EP-A-0 042 145 (COLPO)<br>* Seite 5, Zeile 1 - Zeile 8; Abbildung 4 *<br>--- | 1 | |
| A | US-A-4 521 188 (METZLER)<br>* Spalte 2, Zeile 64 - Spalte 3, Zeile 14; Abbildungen 4,6 *<br>--- | 1 | |
| A | US-A-3 875 665 (WEISSMAN)<br>* Spalte 4, Zeile 1 - Zeile 66; Abbildung 2 *<br><br>----- | 1 | |
| | | | **RECHERCHIERTE SACHGEBIETE (Int. Cl.5 )**<br><br>A61C |

Der vorliegende Recherchenbericht wurde für alle Patentansprüche erstellt

| Recherchenort | Abschlußdatum der Recherche | Prüfer |
|---|---|---|
| DEN HAAG | 11 JUNI 1992 | KOUSOURETAS I. |